# EUROPEAN PATENT APPLICATION

(11) **EP 1 870 618 A1**
(43) Date of publication of application: **26.12.2007**
(21) Application number: 07011796.5
(22) Date of filing: 15.06.2007
(51) Int. Cl.: F16J 15/18

(54) **Seal, sealing system, and method for making the seal**

(30) Priority: 21.06.2006 US 425503
(71) Applicant: EGC Enterprises, Inc., Chardon OH 44024 (US)
(72) Inventor: Dudman, Richard L., Euclid Ohio 44117 (US)
(74) Representative: Jones Day

(57) **Abstract**

A seal (7) for sealing a movable member from a chamber containing a fluid includes a tube having various shapes. The seal is configured to seat in a gland around a movable member. In beneficial embodiments the seal has a tapered shape so that the top portion does not fill the entire gland. The seal can be made of compressed graphite ribbon that has a greater density at the top than the bottom. A die for making the seal in the tapered shape and with a decreasing density gradient is described. A method for making the seal with a die is also described.

## Description

### Field

This technology relates to a seal. In particular, the technology concerns a compression packing seal under a live load useful for sealing a chamber containing a movable member.

### Background

Packing seals are utilized to close off a chamber containing a movable member, such as a shaft, from a second chamber that the movable member extends into. Normally the seal is used to prevent a fluid in the second chamber from leaking out along the axis of the movable member. The movable member may rotate, rise up and down, or rotate and rise up and down. An example of a typical use of a packing seal is in a valve that has a rotating shaft with a stopper on one end that can be rotated to block or unblock the flow of fluid through a conduit.

Typically, a packing seal is placed in a gland, which is an open chamber that encircles the axis of the movable member. A sealing function is accomplished by tightening the packing seal around the movable member, so that the seal is compressed against the movable member and the gland. By eliminating any empty space between the seal and the movable member, an inner diameter seal is accomplished. By eliminating any empty space between the seal and the gland, an outer diameter seal is accomplished.

The seal wears down over time. As the movable member is operated, the seal may be deformed, broken down, or extruded from the chamber. This can cause small openings between the seal and the movable member or between the seal and the gland wall. Consequently, fluid can enter the gland through these openings and disrupt the sealing function.

The sealing engagement can be enhanced by applying pressure on the seal to keep the space between the gland wall and the axis filled with the seal, thereby helping to eliminate any open spaces that may have developed from a breakdown of the packing media. In fact, this continuous pressure is practically necessary to have an effective seal for any length of time. This pressure is typically applied to the seal by a device known as a live-load mechanism. An example of a live-load mechanism is a spring loaded washer that abuts a fixed surface and exerts a force downward on a device known as a gland follower. The gland follower fits on top of the seal and pushes down on the it, following the seal into the gland as the height of the seal decreases.

Due to an effect known as load loss, it is necessary to apply a pressure that is greater than needed on the top of the seal in order to get the desired pressure at the bottom of the seal. Load loss is caused by the frictional forces that operate between the sides of the seal and the gland or the movable member. Frictional forces function to deflect the axially applied pressure in the radial direction reducing the pressure that is axially transmitted to the lower part of the seal.

Friction poses a particular problem with commonly used systems having packing seals composed of graphite and a movable member composed of stainless steel. Due to the high pressure necessary to achieve a good seal, and the high coefficient of friction between graphite and stainless steel, sealing systems of this type often have high frictional forces between the seal and the movable member. This friction can limit the movement of the member relative to the seal and can reduce seal life. In control valve applications, this high friction may necessitate the use of a larger actuator and cause reduced controllability.

With packing seal materials, the frictional force acting between the seal, the movable member, and the gland wall is a primary source of seal breakdown. Another problem related to the frictional breakdown is the extrusion of small particles of the seal from the gland. As the frictional forces cause the seal to breakdown into small particles, these small particles can be extruded from the gland by the urging of the movement of the movable member. At some point this extrusion eventually causes a disruption of the seal.

Extrusion can also be caused by thermal expansion. As the seal rises in temperature it can expand, causing it to seep out of the gland. This thermal expansion can be limited by using a minimum amount of packing material.

Extrusion has been limited by the use of a ring, known as an anti-extrusion ring, placed at the bottom of the packing assembly that is designed to contain the seal but not constrain the movable member unduly. The anti-extrusion ring must also be more resistant to breakdown and deformation than the packing material so that it does not extrude. Braided graphite rings are often used for this purpose.

Packing seals must intermittently be replaced or repaired because they inevitably wear down, deform, or are extruded from the gland. This requires that the mechanism that the seal is acting on be shut down until the seal can be repaired or replaced. Consequently, this entails an expense in lost time while the machine is down; as well as labor and material costs.

Extrusion can also result in unwanted pollution of the environment. EPA emission guidelines have recently been made more stringent to further eliminate even slight equipment leaks.

### Summary

A seal, sealing system, and method for sealing are disclosed. A die for making the seal is also disclosed.

A seal and sealing system for a movable member includes a tubular member having a top opening and a bottom opening, with a long axis extending between the top and bottom openings. The tubular member has: a top surface, a bottom surface, a lower segment including the bottom surface, a middle segment, and an upper segment.

The lower segment has an inner surface and an outer surface that are both parallel to the longitudinal axis, said lower segment being configured to engage a movable member at the inner surface, and a gland at the outer surface.

The middle segment has one of the following axial, cross-sectional shapes:
(a) an outer surface that extends from the outer surface of the lower segment until it meets the upper segment and is not completely parallel to the axis, and an inner surface that extends from the inner surface of the lower segment to the upper segment, and is parallel to the axis;
(b) an inner surface that extends from the inner surface of the lower segment until it meets the upper segment, and is not completely parallel to the axis, and an outer surface that extends from the outer surface of the lower segment to the upper segment, and is parallel to the axis; or
(c) an outer surface that extends from the outer surface of the lower segment until it meets the upper segment and is not completely parallel to the axis, and an inner surface that extends from the inner surface of the lower segment until it meets the upper segment and is not completely parallel to the axis.

The upper segment has an inner surface and an outer surface both extending upwardly parallel to the axis from the middle segment to meet the top surface.

In another embodiment, a seal and sealing system is provided as described above except the upper segment is not present and the top surface is associated with the middle segment. The seal is in contact with a gland follower configured to apply a downward force on the seal, and the gland follower has a first part of a bottom surface that is in direct contact with a portion of the top surface of the tubular seal and the gland follower has a second part of the bottom surface that is not in contact with the tubular seal. The top surface of the tubular seal is flat in the radial plane.

In another embodiment, a seal and sealing system is provided that includes a gland and a seal as described on page 3, wherein the upper segment is not present and the top surface is associated with the middle segment. The middle segment of the seal has the following axial cross-sectional shape: the inner and outer surface extend from the inner and outer surface of the lower segment and converge at a point at the top surface. The seal is positioned in the gland, and the gland contains only the single seal.

In another embodiment, a seal and sealing system is provided that includes a seal as described on page 3, except the upper segment is not present and the top surface is associated with the middle segment, and the middle segment has an outer surface that extends to the top surface and is not completely parallel to the axis, and an inner surface that extends to the top surface and is not completely parallel to the axis; and the bottom surface associated with the lower segment is flat in the radial plane.

In another embodiment, a seal and sealing system is provided that includes a seal as described on page 3, except the upper segment is not present and the top surface is associated with the middle segment, and the middle segment has an outer surface that extends to the top surface and is not completely parallel to the axis, and an inner surface that extends to the top surface and is not completely parallel to the axis.

A system for sealing a movable member is also provided that includes a tubular seal member having an axially extending opening, with one end of the opening being positioned at the top of the member and the other end of the opening being positioned at the bottom of the member; a gland configured to receive the seal member and having a bottom surface and walls, with the bottom of the seal member being associated with the bottom surface of the gland; wherein said seal member has a density that decreases from the top to the bottom of the member.

A method of making a compressed tubular seal includes the steps of: providing a tubular mandrel that has a longitudinal axis with a top end and a bottom end; wrapping a ribbon of flexible compressible material axially around the tubular mandrel at the bottom end thereof to form a wrapped mandrel that has a wrapped portion and an unwrapped portion, the ribbon being wrapped more thickly at the bottom end of the mandrel than at any other portion; inserting the wrapped mandrel into a barrel that is configured to fit the shape of the wrapped mandrel and enclose all but a top surface of the wrapped portion; and compressing the wrapped portion with a plunger that is configured to contact the top surface of the wrapped portion, by aligning the plunger with the top surface of the wrapped portion and applying a force in a downward direction on the plunger to form a seal.

### Brief Description of the Several Views of the Drawings

Figure 1 is an axial cross-sectional view of an example seal installed in a ball valve assembly;
Figure 2 is a perspective view of a first example seal;
Figure 3 is a perspective view of a second example seal;
Figure 4 is a perspective view of a third example seal;
Figure 5 is a partial axial cross-sectional view of the first example seal, shown in Fig. 2;
Figure 6 is a partial axial cross-sectional view of the second example seal, shown in Fig. 3;
Figure 7 is a partial axial cross-sectional view of the third example seal, shown in Fig. 4;
Figure 8 is a partial axial cross-sectional view of a fourth example seal;
Figure 9 is a partial axial cross-sectional view of a fifth example seal;
Figure 10 is a partial axial cross-sectional view of a sixth example seal;
Figure 11 is a partial axial cross-sectional view of a seventh example seal;
Figure 12 is a partial axial cross-sectional view of an eighth example seal;
Figure 13 is a partial axial cross-sectional view of an example sealing system;
Figure 14 is a partial axial cross sectional view of a first example of a die showing a well and a mandrel;
Figure 15 is a partial axial cross sectional view of a second example of a die showing a well and a mandrel;
Figure 16 is a partial axial cross sectional view of a third example of a die showing a well and a mandrel;
Figure 17 is a partial axial cross sectional view of an example of a die showing a well, a mandrel, and a plunger;
Figure 18 is a partial axial cross sectional view of an example of a method for making a seal;
Figure 19 is a partial axial cross sectional view of an example of a prior art sealing system indicating the radial and axial forces involved and the effect of load-loss;
Figure 20 is a partial axial cross sectional view of an example sealing system indicating the radial and axial forces involved and the effect of load-loss;
Figure 21 is a partial axial cross sectional view of a second example sealing system indicating the radial and axial forces involved and the effect of load-loss;
Figure 22 is a partial axial cross sectional view of a third example sealing system indicating the radial and axial forces involved and the effect of load-loss.

### Detailed Description

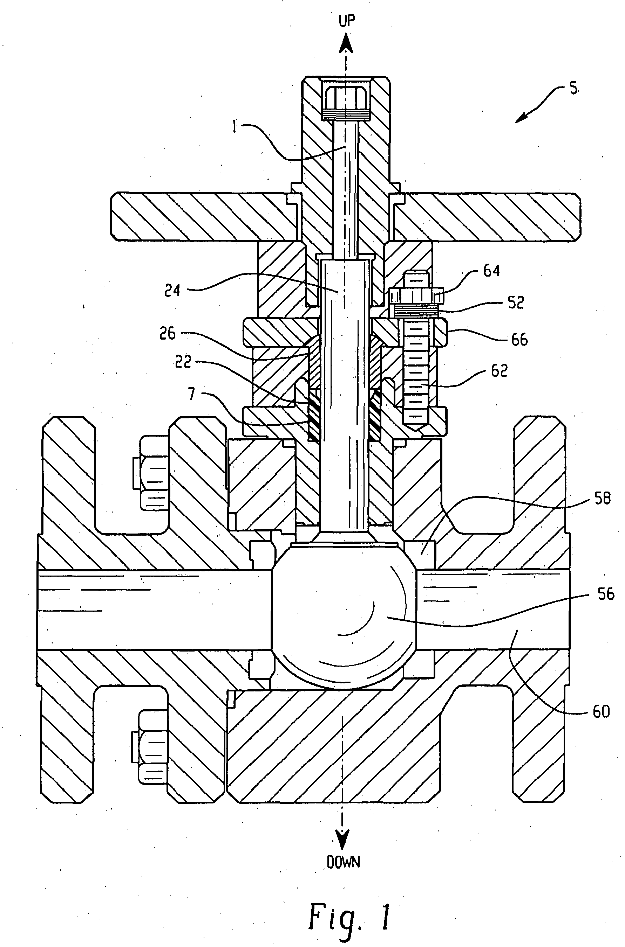

An exemplary embodiment of an example seal 7 is shown in Figure 1 installed in a ball valve assembly 5. The ball valve assembly 5 includes a movable member 24, a gland 22, the example seal 7 and a chamber containing a fluid 58. The movable member 24 is inserted through the gland 22 and into a chamber containing a fluid 58. The seal 7 functions to minimize fluid leakage from the chamber 58 around the movable member 24. In the ball valve assembly 5 that is depicted in Figure 1, the movable member 24 is moved to control a valve 56 that allows or restricts the flow of a fluid through a conduit 60. The seal 7 is packed into the gland 22 and positioned around the movable member 24 so that no open spaces remain for fluid to escape into the gland 22 or to the outer surfaces of the assembly 5.

Continual application of pressure on the seal is desirable and is accomplished by a live-load mechanism that may have various forms, any of which may be utilized with the example seal 7. As depicted in Figure 1, one type of live-load mechanism consists of a nut 64, a bolt 62, a gland follower 26, a plate 66, and a spring-loaded washer 52, such as a Belleville washer. The nut 64 and bolt 62 fasten the gland follower 26 against the seal 7. The washer 52 is positioned between the nut 64 and the plate 66. The live-load mechanism continually exerts a downward force on the plate 66, and the plate 66 distributes the force to the gland follower 26. The gland follower 26 is in contiguous contact with the top surface of the seal and distributes a downward force to the seal 7.

The operation of such valves and live-load mechanisms are well-known and need not be described in further detail here. Furthermore, the example seal 7 is not limited to use in this example of a valve gland. It may also be used in other sealing applications that would be apparent to those with skill in the art.

The example seals shown in each of the figures are in a tubular shape. A tube is hereby defined as a hollow, cylindrical member that is elongated: The ends of the hollow cylindrical member are open. The tube is defined about a longitudinal axis 1 that is centered inside the hollow opening. The upward direction, as used herein, is defined as toward the up arrow of the axis 1, and the downward direction, as used herein, is defined as toward the down arrow of the axis 1. The axial direction is hereby defined as running parallel to the axis. The radial direction is hereby defined as running transverse to the axial direction. A tube may have any number of radial or axial cross-sectional shapes and, specifically, is not limited to just a circular radial cross-section.

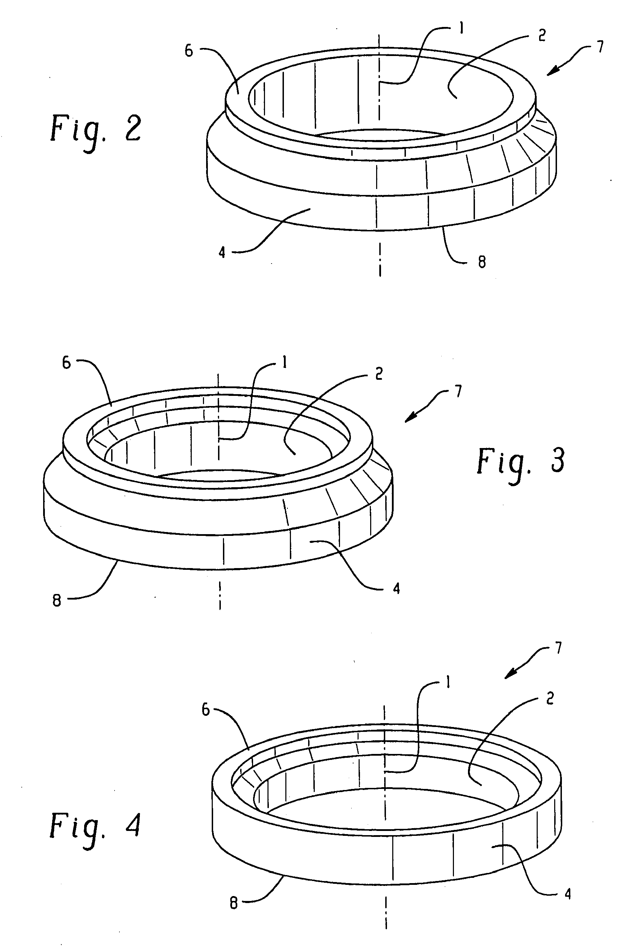

Referring to Figures 2-7, the example tubular seal 7 has an outer surface 4 that runs along a radially outer portion. The seal 7 has an inner surface 2 that runs along the radially inner portion. The seal 7 has a top surface 6 that is located around the face of the upper opening. The seal 7 has a bottom surface 8 that is located around the face of the lower opening.

Figures 2-7 each show a three-segmented embodiment of the example seal 7. The segments are integral and form an undivided seal member, but are discussed herein as individual segments to describe the differing geometric configurations of each segment. The embodiments shown in Figures 2-7 have a lower, a middle, and an upper segment.

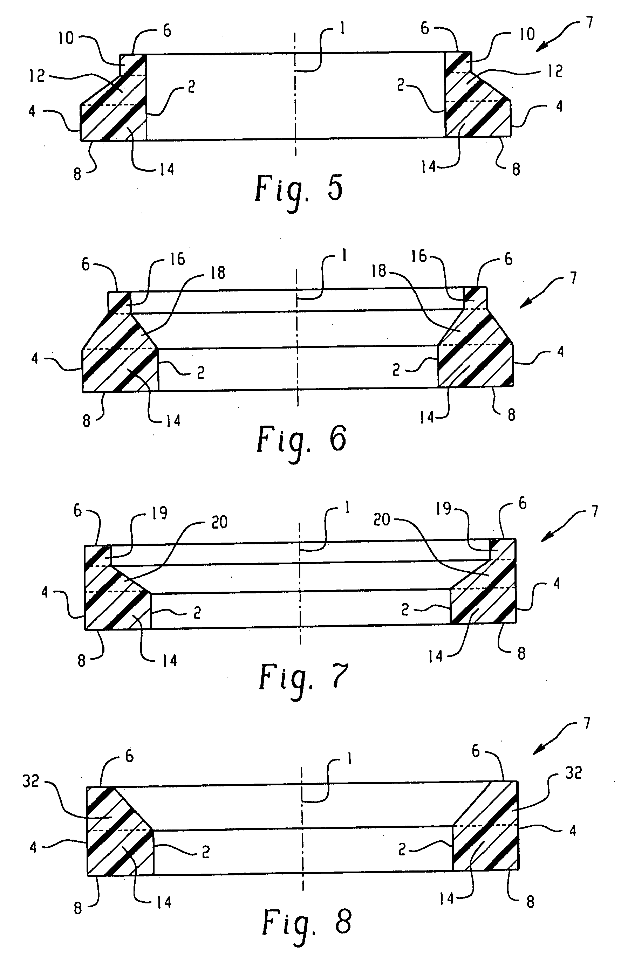

Figures 5-7 depict cross-sections of the seals presented in Figures 2-4 respectively. As shown in Figures 5-7 the lower segment 14 of each of these embodiments has a radially inner surface 2 and a radially outer surface 4. Both the inner surface 2 and the outer surface 4 extend from the bottom of the lower segment 14, have side walls that are parallel to the axis 1. The inner surface 2, or a portion thereof, is configured to engage a movable member, and the outer surface 4, or a portion thereof, is configured to engage a gland.

Being configured to engage a movable member means being shaped to be in contiguous contact with a movable member. Being configured to engage a gland means being shaped to be in contiguous contact with a gland surface. The bottom surface of the lower segment defines the bottom surface 8 of the tubular seal 7 and is configured to engage the bottom of the gland. The lower segment 14 is typically located at the bottom end of the gland 22 and provides the majority of the sealing function.

The middle segments 12, 18, 20 are different in each of the embodiments shown in Figures 2-4 and in Figures 5-7. In the embodiment shown in Figures 2 and 5 the middle segment 12 is positioned on top of the lower segment 14 and has a radially outer surface that extends from the outer surface of the lower segment 14 until it meets the upper segment 10 and is not completely parallel to the axis 1. Not completely parallel means that the surface may have any number of cross-sectional shapes, including a portion that is parallel to the axis 1, but the entire outer surface of the segment cannot be parallel to the axis 1.

As shown in Figure 5, the outer surface of the middle segment 12 has a straight slope, but could be curved, among other shapes. The outer surface of the middle segment 12 in Figure 5 has a frusto-conical shape and an axial cross-section that extends from the lower segment 14 at an angle upwardly and radially inwardly until it meets the upper segment 10. The radially inner surface 2 of the middle segment 12 extends upwardly from the radially inner surface of the lower segment 14 until it meets the upper segment 10, is parallel to the axis 1, and may be configured to engage a movable member. The inner and outer surfaces may take other shapes.

In the embodiment shown in Figure 6, the middle segment 18 is positioned on top of the lower segment 14 and has a radially outer surface that extends from the outer surface of the lower segment 14 until it meets the upper segment 16 and is not completely parallel to the axis 1. Here, as shown in Figure 6 the outer surface has a frusto-conical shape and an axial cross-section that extends from the lower segment 14 at an angle upwardly and radially inwardly. A radially inner surface of the middle segment 18 extends from the radially inner surface of the lower segment 14 until it meets the upper segment 16 and is not completely parallel to the axis 1. The inner surface has a frusto-conical shape and an axial cross-section that extends from the lower segment 14 at an angle upwardly and radially outwardly until it meets the upper segment 16. The inner and outer surfaces may take other shapes.

In the embodiment shown in Figure 7, the middle segment 20 is positioned on top of the lower segment 14 and the radially outer surface of the middle segment 20 extends from the radially outer surface of the lower segment 14 until it meets the upper segment 19, is parallel to the axis 1, and may be configured to engage a gland. The radially inner surface extends from the inner surface of the lower segment 14 until it meets the upper segment 19 and is not completely parallel to the axis 1. The inner surface has a frusto-conical shape and an axial cross-section that extends from the lower segment 14 at an angle upwardly, radially outwardly until it meets the upper segment 19. The inner and outer surfaces may take other shapes.

In the embodiments shown in Figures 2-7, each of the upper segments 10, 16, 19 are positioned respectively on top of one of the middle segments 12, 18, 20. The radially outer surfaces of the upper segments 10, 16, 19 extend from the radially outer surfaces of their corresponding middle segments 12, 18, 20 and are parallel to the axis 1. The radially inner surfaces of the upper segments 10, 16, 19 extend from the radially inner surfaces of their corresponding middle segments 12, 18, 20 and are parallel to the axis 1.

In the embodiment shown in Figure 5, the radially inner surface of the upper segment may be configured to engage a movable member. In the embodiment shown in Figure 7, the radially outer surface may be configured to engage a gland. The top surface of the upper segments 10, 16, 19 define the top 6 of the tubular seal 7, and may be configured to engage a gland follower 26 in that at least a portion of the top surface is shaped to be in contiguous contact with a gland follower.

In the embodiments that are depicted in Figures 2-7, both the top surface 6 and bottom surface 8 of the tubular seal 7 are flat in the radial plane. The example seal 7, however, is not limited to having top or bottom surfaces that are flat in the radial plane.

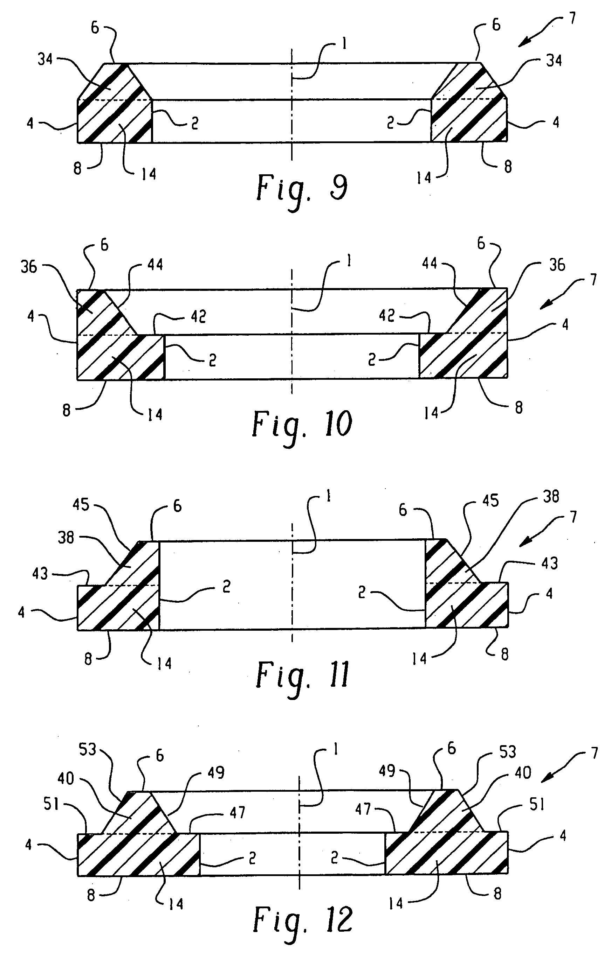

Figures 8 and 9 depict two additional embodiments of the example seal 7. The axial cross-sections of the embodiments shown in Figures 8 and 9 include two segments: a lower segment 14 and upper segments 32, 34. The lower segment 14 has radially outer and radially inner surfaces that are axially parallel and extend upwardly from the bottom surface 8. Furthermore, the seal 7 may be configured to contact a gland 22 at the radially outer surface 4 and a movable member 24 at the radially inner surface 2.

In the embodiment shown in Figure 8, the upper segment 32 is positioned on top of the lower segment 14 and the radially outer surface extends from the radially outer surface of the lower segment 14 to the top surface 6, is parallel to the axis 1, and may be configured to engage a gland 22. The radially inner surface extends from the radially inner surface of the lower segment 14 to the top surface 6 and is not completely parallel to the axis 1. The inner surface has a frusto-conical shape and an axial cross-section that extends from the lower segment 14 at an angle upwardly and radially outwardly to the top surface 6. The inner and outer surfaces may take other shapes.

In the embodiment shown in Figure 9, the upper segment 34 is positioned on top of the lower segment 14 and has a radially outer surface that extends from the outer surface of the lower segment 14 to the top surface 6 and is not completely parallel to the axis 1. The outer surface has a frusto-conical shape and an axial cross-section that extends from the lower segment 14 at an angle upwardly and radially inwardly. The radially inner surface extends from the radially inner surface of the lower segment 14 to the top surface 6 and is not completely parallel to the axis 1. The inner surface has a frusto-conical shape and an axial cross-section that extends from the lower segment 14 at an angle upwardly, radially outwardly to the top surface 6. The inner and outer surfaces may take other shapes.

The top surfaces of the upper segments 32, 34 of Figures 8 and 9 define the top surfaces 6 of the respective tubular seals. The top surface 6 of the embodiment shown in Figure 8 may be configured to engage a gland follower 26. It is contemplated that in some embodiments the top surface 6 could be a point rather than a flat surface as shown in the figures.

Additional embodiments of the seal 7 are presented in Figures 10-12. The axial cross-sections of the embodiments shown in Figures 10-12 also include only two segments: a lower segment 14 and upper segments 36, 38, and 40. The lower segment 14 has radially outer and radially inner surfaces that are axially parallel and extend upwardly from the bottom surface 8. The lower segments 14 may also contact both the gland 26 and the movable member 24.

The embodiments of the seal 7 presented in Figures 10-12 are stepped outwardly from the inner surface of the lower segment, and/or stepped inwardly from the outer surface of the lower segment. Stepped means that the outer or inner surface is partially flat in the radial plane. This is described in more detail below with specific regard to the each of the Figures 10-12.

The embodiment shown in Figure 10 has an upper segment 36 with a radially inner surface that has two portions: a first portion 42 that extends from the inner surface of the lower segment 14 and is flat in the radial plane, and a second portion 44 that extends upwardly from the first portion to the top surface 6 and is not completely parallel to the axis 1. The second portion 44 of the inner surface has a frusto-conical shape and an axial cross-section that extends from the first portion 42 at an angle upwardly and radially outwardly to the top surface. Other shapes may also be utilized. Upper segment 36 also has a radially outer surface that extends to the top, is parallel to the axis 1, and is configured to engage a movable member. The top surface of the upper segment 36 defines the top surface 6 of the tubular seal 7, and may be configured to engage a gland follower. The top surface 6 could be a point, if so desired.

The embodiment shown in Figure 11 has an upper segment 38 with a radially outer surface that has two portions: a first portion 43 that extends from the outer surface of the lower segment and is flat in the radial plane, and a second portion 45 that extends upwardly from the first portion 43 to the top surface and is not completely parallel to the axis 1. The second portion 45 of the outer surface has a frusto-conical shape and an axial cross-section that extends from the first portion 43 at an angle upwardly and radially inwardly to the top surface. This is merely one possible shape. A radially inner surface extends from the radially inner surface of the lower segment to the top surface, is parallel to the axis 1, and is configured to engage a movable member. Upper segment 38 also has a radially outer surface that extends to the top, is parallel to the axis 1, and is configured to engage a movable member. The top surface of the upper segment 38 defines the top surface 6 of the tubular seal 7, and is configured to engage a gland follower in some embodiments. In some embodiments, the top surface 6 could be a point.

The embodiment shown in Figure 12 has an upper segment 40 with a radially outer surface that has two axially cross-sectional portions: a first portion 51 that extends from the outer surface of the lower segment and is flat in the radial plane, and a second portion 53 that extends upwardly from the first portion to the top surface and is not completely parallel to the axis 1. The second portion 53 of the radially outer surface has a frusto-conical shape and an axial cross-section that extends from the first portion 51 at an angle upwardly and radially inwardly to the top surface. This is merely one possible shape and others may be utilized. The radially inner surface also has two axially cross-sectional portions: a first portion 47 that extends from the inner surface of the lower segment and is flat in the radial plane, and a second portion 49 that extends upwardly from the first portion 47 to the top surface and is not completely parallel to the axis 1. Here, as shown in Figure 12, the second portion of the radially inner surface has a frusto-conical shape and an axial cross-section that extends from the first portion 47 at an angle upwardly, radially outwardly to the top surface. This is merely one possible shape. The top surface of the upper segment 40 defines the top surface 6 of the tubular seal 7, and may be configured to engage a gland follower. It is contemplated that in other embodiments the top surface 6 could be a point.

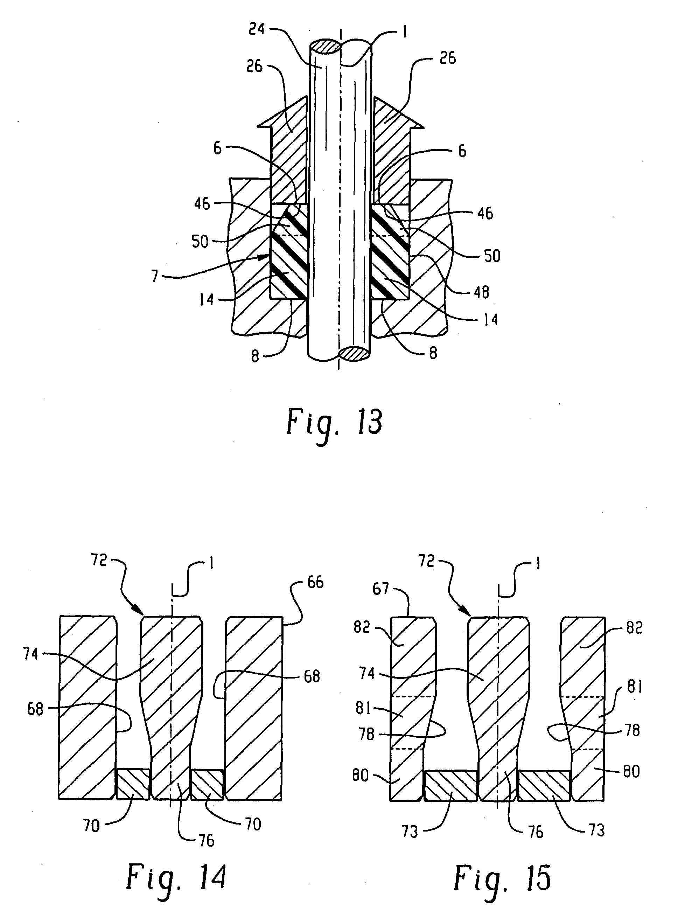

An embodiment of a system for sealing is shown in Figure 13. An alternative embodiment of the seal 7 is shown seated in the gland 48 with a gland follower 26 being in contiguous contact with the top surface 6 of the seal 7. In this embodiment, a two segment seal 7 has a lower segment 14 and an upper segment 50. The lower segment 14 has both radially inner and outer surfaces that extend from the bottom surface 8 and are parallel to the axis 1. The radially inner surface is configured to engage a movable member, and the radially outer surface is configured to engage a gland. The upper segment 50 is positioned on top of the lower segment 14 and has a radially outer surface that extends from the outer surface of the lower segment 14 to the top surface 6 and is not completely parallel to the axis 1. As shown in Figure 13 the outer surface has a frusto-conical shape and an axial cross-section that extends from the lower segment 14 at an angle upwardly and radially inwardly to the top surface 6. This is merely one possible shape and other shapes may also be utilized. The radially inner surface of the upper segment 50 extends upwardly from the radially inner surface of the lower segment 14 to the top surface, is parallel to the axis 1, and is configured to engage a movable member.

The gland follower 26 has a bottom surface 46 that is entirely flat in the radial plane in this embodiment of the system, but other shapes and configurations are possible. For example, in another embodiment, only a portion of the bottom surface 46 of the gland follower 26 contacts a flat part of the top surface 6 of the seal 7. Furthermore, other embodiments of the seal 7 could be used in this system as well.

In yet another embodiment, the gland follower 26 is not directly in contact with the seal 7. In this embodiment, the disclosed seal 7 is underneath another type of packing that is already known, and the gland follower 26 is in direct contact and exerts a force on the packing above.

The amount of pressure at the top surface of the seal 7 that is necessary to insure an adequate seal will vary with the particular application. A preferred density of the seal 7 is about 120 lbs./ft.³ (1922 kg/m³) at the top, decreasing to about 90 lbs./ft.³ (1441 kg/m³) at the bottom.

Only one seal 7 is necessary to provide an adequate seal, however, other contemplated embodiments include combining the various shapes listed above with additional packing materials added to the sealing system with any particular example seal. For example, cylindrical rings or other shaped packing could be combined with various embodiments of the invention. Another example is an anti-extrusion ring that could be used in conjunction with various examples of the seal 7. Such a ring is used to help eliminate extrusion and would be placed between the bottom of the gland and the bottom surface of the seal 7.

The above described seals may be composed of axially wound compressed graphite ribbon. GRAFOIL is one type of graphite ribbon that has been found to be suitable. Materials other than graphite are also possible to use as seals.

Shaped graphite seals can be made by axially wrapping flat graphite sheets around a mandrel into substantially the desired shape. The final shape is set by inserting the wrapped mandrel into a die and compressing the wrapped portion so that it conforms to the shape of the die. This process is described in more detail below.

In one embodiment, the seal 7 has a density that decreases from the top to the bottom. This density gradient can be created by the manufacturing process described below or any type of manufacturing process that can create the desired results. This density gradient may be beneficial in any tubular shape with a lower segment 14 like those illustrated in the figures. This includes shapes described above and other shapes including a seal with an entirely rectangular cross-section. The lower density at the bottom of the seal gives the material greater resiliency and it correspondingly exerts greater pressure at the bottom of the seal when it is under a live-load. This allows for tighter packing and a better seal toward the bottom part of the seal.

The embodiments shown in Figures 3, 4, 6, 7, 8, 9, 10, and 12 and described above have a portion of the radially inner surface of the seal 7 that is not in contact with the movable member. There is an open space in the gland in this area. This open space does not produce any sealing in this area, however, it beneficially eliminates any frictional forces that are present between the movable member and the seal 7 in this area. It also decreases the frictional forces acting between the gland and the seal 7.

In the embodiments shown in Figures 2, 3, 5, 6, 9, 11, and 12 and described above, when the seal 7 is placed in a gland, there is an open space between the gland and the radially outer surface. This open space eliminates any friction between the two surfaces in this area. Friction is also decreased on the other side of this area between the movable member and the packing as well, because there is not a tight fit to force the packing against the wall of the gland and the movable member. This decrease in friction reduces load-loss. Load-loss is the decrease in pressure from the top of the seal 7 to the bottom of the seal 7, as pressure is applied to the top of the seal 7. A decrease in load-loss is beneficial in that the live-load mechanism need not exert as much pressure on the seal 7 to get the desired pressure at the bottom of the seal 7, where it contacts the fluid, and where the primary sealing action takes place.

Those of skill in the art will recognize that the decreased friction and pressure that is applied to the above described sealing system will reduce extrusion. Extrusion will be decreased because there is less friction to act on the seal 7 to break it down. The seal 7 will wear away more slowly in this system than in a conventional system. Extrusion may also be decreased because of the lessened pressure that is necessary to apply to the system.

The fact that the seal 7 will wear down and extrude more slowly means that less seal material will be needed. Furthermore, the seal 7 will not need maintenance as often as conventional seals. Accordingly, the example seal 7 should save costs in raw material, labor, and maintenance down-time.

A cross-section of an embodiment of a die that is used to form the example seal 7 is shown in Figure 14. The die includes a barrel 66 that is defined about an axis 1. The barrel has barrel walls 68 that are parallel to the axis 1.

The die also includes a mandrel 72 that is defined about the axis 1. The mandrel 72 has a lower portion 76, an upper portion 74, and a base 70. The radial dimension of the lower portion 76 is less than the radial dimension of the upper portion 74. The radial dimension means the distance that the outer surface of the mandrel extends from the axis 1 in the radial direction. In other words, the entire outer surface of the upper portion 74 extends radially further from the axis 1 than the outer surface of the lower section 76. The base 70 is located at the bottom of the mandrel 72, and in the embodiment of Fig. 14 exists as a separate piece that is placed in-between the mandrel 72 and the barrel 66. It could also be connected to the mandrel 72 or the barrel 66

Another cross-section of an embodiment of a die that is used to form embodiments of the seal 7 is shown in Figure 15. The die includes a barrel 67 that is defined about an axis 1. The barrel 67 has barrel walls 78 that are partially parallel to the axis 1. The barrel walls 78 have an upper portion 82 and a lower portion 80. The upper portion 82 and lower portion 80 are connected by a sloping portion 81. The radial dimension of the barrel walls 78 of the lower portion 80 is greater than the radial dimension of the walls 78 of the upper portion 82. The radial dimension means the distance that the inner surface of the walls 78 extends from the axis 1 in the radial direction. In other words, the entire inner surface of the lower portion 80 extends radially further from the axis 1 than the inner surface of the upper portion 82.

The die also includes a mandrel 72 and a base 73 that are defined about the axis 1. The mandrel has a lower portion 76 and an upper portion 74. The radial dimension of the lower portion 76 is less than the radial dimension of the upper portion 74. The base 73 is located at the bottom of the mandrel 72, and is placed in-between the mandrel 72 and the barrel 67.

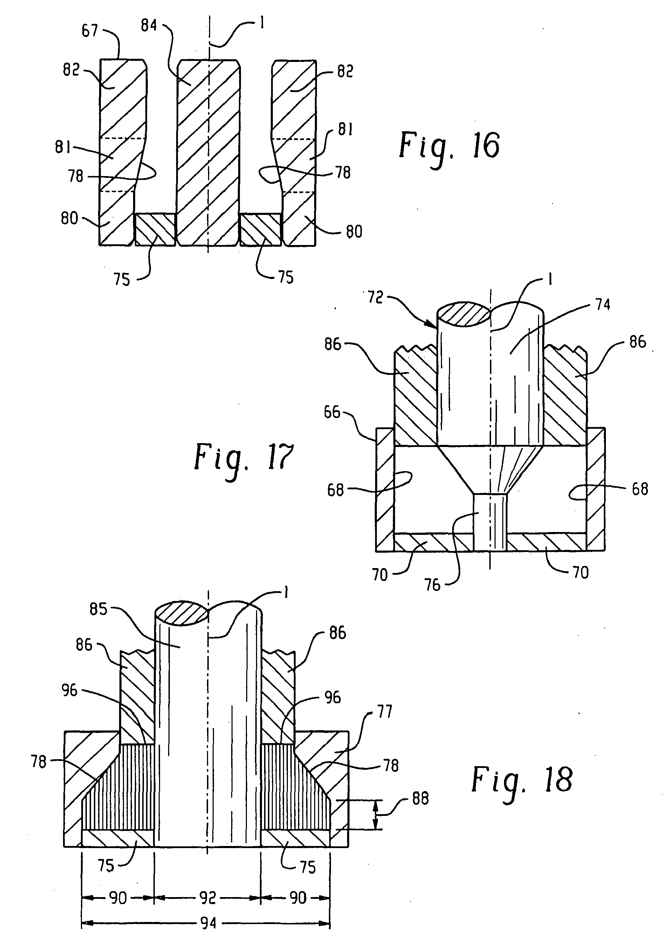

Another cross-section of an embodiment of a die that is used to form embodiments of the seal 7 is shown in Figure 16. The die includes a barrel 67 that is defined about an axis 1. The barrel 67 has barrel walls 78 that extend partially parallel to the axis 1. The barrel walls 78 have an upper portion 82 and a lower portion 80. The upper portion 82 and lower portion 80 are connected by a sloping portion 81. The radial dimension of the barrel walls 78 of the lower portion 80 is greater than the radial dimension of the barrel walls 78 of the upper portion 82. The die also includes a mandrel 84 and a base 75 that are defined about the axis 1. The mandrel 84 has sides that are parallel to the axis 1. The base 75 is located at the bottom of the mandrel 84, and is placed in-between the mandrel 84 and the barrel 67.

Another cross-section of an embodiment of a die that is used to form embodiments of the seal 7 is shown in Figure 17. The die in this figure differs from Figure 14 only in that it includes a plunger 86 that is a tubular member that is configured to fit into the top opening of the barrel 67 and around the upper portion of the mandrel 72. In operation, the plunger 86 exerts an axially downward force on material in the die, and as a result the material in the die is compressed. During this process, the material conforms to the shape of the die. Because of the shape of the die and mandrel, and the location of the plunger 86, the material is made more dense at its top portion than its bottom portion.

A method for making the example seal 7 is illustrated in Figure 18. The first step is to provide a tubular mandrel 85 that is defined about an axis 1. Secondly, a ribbon of flexible compressible material is wrapped axially around the tubular mandrel 85. This forms a wrapped mandrel 94 that has a wrapped portion 90 and a mandrel portion 92. In this embodiment, the ribbon is wrapped more thickly at a bottom portion 88 of the mandrel 92 than any other portion. This means that in a cross-sectional view of the wrapped mandrel 94, the wrapped portion 90 has its greatest radial width at the bottom portion 88. This does not mean that the wrapped portion necessarily has a greater radial distance from the axis at the bottom portion 88, although it does in the embodiment shown in Figure 18. Examples of other embodiments of a die where the wrapped portion 90 has its greatest radial width at the bottom portion 88, but does not have a greater radial distance at the bottom portion 88 are shown in Figures 15 and 18.

Thirdly, the wrapped mandrel is inserted into a barrel 77 that is configured to fit the shape of the wrapped mandrel 94 and a mandrel base 75 is placed on the bottom part of the mandrel 85. Accordingly, the mandrel base 75 and barrel 77 enclose all but a top surface 96 of the wrapped portion 90. The barrel 77 in this embodiment is similar to the dimensions of the barrel of the die shown in Figure 16. However, other variations are contemplated, for example, those shown in Figures 14 and 15.

Fourthly, an axially downward force is applied to the wrapped portion 90 via a plunger 86, as shown in Figures 17-18. The plunger is aligned so that the bottom surface of the plunger 86 contacts the top surface 96 of the wrapped portion 90 and the plunger fits around the mandrel 85. When force is applied downwardly by the plunger 86, the plunger 86 transfers the force onto the top of the wrapped portion 96 and the wrapped portion 90 compresses and conforms to the shape defined by the walls 78 of the barrel 67, the mandrel portion 92, the mandrel base 75, and the plunger 86. During this process, because of the shape of the die, the material is made more dense at its top portion than its bottom portion.

Although any compressible material can be used to form the seal 7 by the above method, one beneficial material is graphite. When axially-wrapped graphite sheets are compressed, the bonding planes of the graphite buckle or crinkle. This is beneficial because it adds greater resiliency to the material.

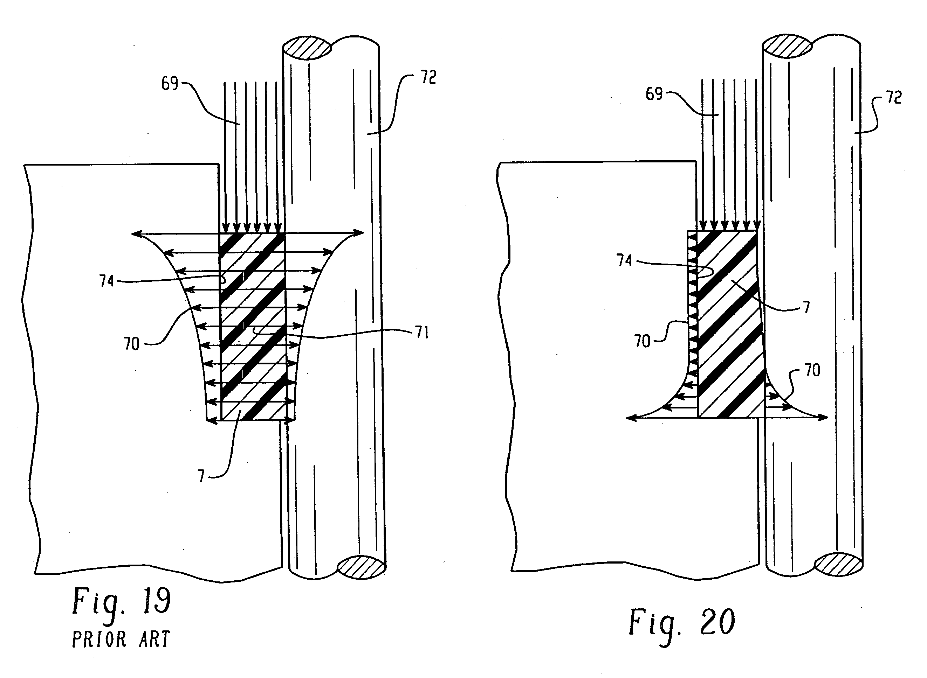

Figures 20-23 show the forces from the various embodiments of the seal that are applied to the surrounding parts during operation. In Figure 19, a prior art seal 71 is depicted. As an axial force 69 is applied to the top of the seal 71, the seal 71 distributes the axial force 69 in the form of radial forces 70 to the gland 74 and the movable member 72 along the entire length of the seal 71. The length of the arrows depicting the radial forces 70 demonstrates the load-loss effect on the prior art seal 71. Much of the axial force 69 that is applied to the system is not transmitted to the bottom of the seal, because it is lost due to the radial frictional forces 70 acting on the side of the gland 74 and the movable member 72. This results in lower sealing force at the bottom of the gland 74, where the seal 71 is in contact with a fluid.

Figure 20 depicts an embodiment of the seal 7 of Figures 8 and 4 in a gland 74 contacting a movable member 72. As an axial force 69 is applied to the top of the seal 7, the radial forces 70 on the movable member 72 are not present where there is no contact with the movable member 72 at the top of the seal, and the radial forces 70 on the gland 74 are dissipated at the top of the seal 7 relative to the prior art seal 71. The greater radial forces 70 are located at the bottom of the seal 7, where the seal 7 comes in contact with a fluid. This enhances the sealing effect at the point of contact with the fluid.

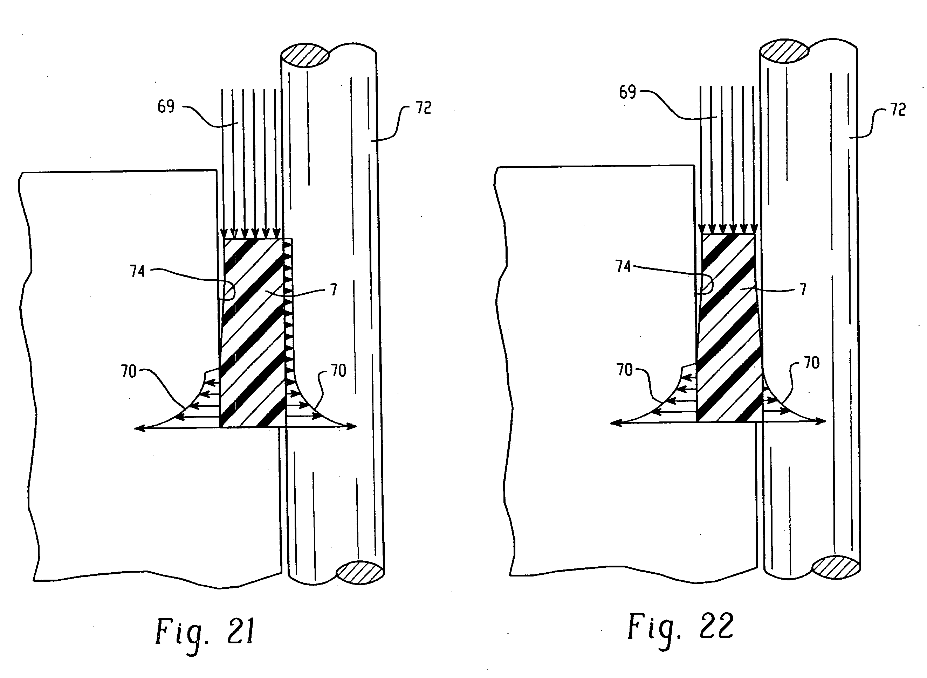

Figure 21 depicts the seal 7 of Figures 5 and 2 in a gland 70 contacting a movable member 72. As an axial force 69 is applied to the top of the seal 7, the radial forces 69 on the gland 74 are not present where there is no contact with the gland 74 at the top of the seal 7, and the radial forces 70 on the movable member 72 are dissipated at the top of the seal 7 relative to the prior art seal 71. The greater radial forces 70 are located at the bottom of the seal 7, where the seal 7 comes in contact with a fluid. This enhances the sealing effect at the point of contact with the fluid.

Figure 22 depicts the seal 7 of Figures 6 and 3 in a gland 70 contacting a movable member 72. As an axial force 69 is applied to the top of the seal 7, the radial forces 70 on the movable member 72 and gland 74 are not present where there is no contact with the movable member 72 and gland 74 at the top of the seal 7. The greater radial forces 70 are located at the bottom of the seal 7, where the seal 7 comes in contact with a fluid. This enhances the sealing effect at the point of contact with the fluid.

While various features of the claimed invention are presented above, it should be understood that the features may be used singly or in any combination thereof. Therefore, the claims are not to be limited to only the specific examples depicted herein.

Further, it should be understood that variations and modifications may occur to those skilled in the art to which the claims pertain. The embodiments described herein are exemplary. The disclosure may enable those skilled in the art to make and use examples having alternative elements that likewise correspond to the elements recited in the claims. The intended scope of the disclosure may thus include other examples that do not differ or that insubstantially differ from the literal language of the claims. The scope of the present disclosure is accordingly defined as set forth in the appended claims.

## Claims

1. A sealing system for a movable member comprising:
a tubular seal having a top opening and a bottom opening, with a long axis extending between the top and bottom openings, said seal having:
a top surface,
a bottom surface;
a lower segment including the bottom surface
a middle segment, and
an upper segment;
wherein the lower segment has an inner surface and an outer surface that are both parallel to the longitudinal axis, said lower segment being configured to engage a movable member at the inner surface, and a gland at the outer surface;
the middle segment having one of the following axial, cross-sectional shapes:
(a) an outer surface that extends from the outer surface of the lower segment until it meets the upper segment and is not completely parallel to the axis, and an inner surface that extends from the inner surface of the lower segment to the upper segment, and is parallel to the axis;
(b) an inner surface that extends from the inner surface of the lower segment until it meets the upper segment, and is not completely parallel to the axis, and an outer surface that extends from the outer surface of the lower segment to the upper segment, and is parallel to the axis; or
(c) an outer surface that extends from the outer surface of the lower segment until it meets the upper segment and is not completely parallel to the axis, and an inner surface that extends from the inner surface of the lower segment until it meets the upper segment and is not completely parallel to the axis;
the upper segment having an inner surface and an outer surface both extending upwardly parallel to the axis from the middle segment to meet the top surface.

2. The sealing system of claim 1 wherein the upper segment is not present and the top surface is associated with the middle segment,
wherein said seal is in contact with a gland follower configured to apply a downward force on the seal, the gland follower having a first part of a bottom surface that is in direct contact with a portion of the top surface of the tubular seal
the top surface of the tubular seal being flat in the radial plane, and
the gland follower having a second part of the bottom surface that is not in contact with the tubular seal.

3. The sealing system of claim 1 further comprising:
a gland follower;
wherein the upper segment of the seal is not present and the top surface is associated with the middle segment; and
the middle segment has the following axial cross-sectional shape:
an outer surface that extends to meet the top surface and is not completely parallel to
the axis, and an inner surface that extends to meet the top surface until it meets the upper segment and is not completely parallel to the axis; and
the top surface has a point;
said gland follower having a bottom surface and being configured to apply a downward force on the seal, the bottom surface of which directly engages the top surface of the seal.

4. The sealing system of claim 1 wherein the middle segment of the seal is one or both of:
stepped radially outwardly from the inner surface of the lower segment, and
stepped radially inwardly from the outer surface of the lower segment.

5. The sealing system of claim 1 further comprising:
a gland; and
wherein the upper segment of the seal is not present and the top surface is associated with the middle segment, with the seal being positioned in the gland;
wherein the middle segment has the following axial cross-sectional shape:
the inner and outer surface of the middle segment extend from the inner and outer surface of the lower segment and converge at a point at the top surface;
wherein the gland contains only one seal.

6. The sealing system of claim 1 wherein the upper segment of the seal is not present and the top surface is associated with the middle segment;
wherein the middle segment has an outer surface that extends to the top surface and is not completely parallel to the axis, and an inner surface that extends to the top surface and is not completely parallel to the axis; and
the bottom surface associated with the lower segment is flat in the radial plane.

7. The sealing system of claim 1 wherein the upper segment of the seal is not present and the top surface is associated with the middle segment;
wherein the middle segment has an outer surface that extends to the top surface and is not completely parallel to the axis, and an inner surface that extends to the top surface and is not completely parallel to the axis.

8. The sealing system of claim 1 wherein the tubular seal is formed of compressed graphite ribbon.

9. The sealing system of claim 2 wherein the tubular seal is formed of compressed graphite ribbon.

10. The sealing system of claim 3 wherein the tubular seal is formed of compressed graphite ribbon.

11. The sealing system of claim 4 wherein the tubular seal is formed of compressed graphite ribbon.

12. The sealing system of claim 5 wherein the tubular seal is formed of compressed graphite ribbon.

13. The sealing system of claim 6 wherein the tubular seal is formed of compressed graphite ribbon.

14. The sealing system of claim 7 wherein the tubular seal is formed of compressed graphite ribbon.

15. The sealing system of claim 1 further comprising:
a gland configured to receive the seal member and having a bottom surface and walls, with the bottom of the seal member being associated with the bottom surface of the gland;
wherein said seal member has a density that decreases from the top to the bottom of the member.

16. The sealing system of claim 15 wherein the system comprises a single tubular seal.

17. The sealing system of claim 15 wherein the tubular seal is composed of compressed graphite ribbon.

18. The sealing system of claim 15 wherein the seal has
a top surface,
a bottom surface;
a lower segment having the bottom surface; and
an upper segment;
wherein the lower segment has an inner surface and an outer surface that are both parallel to the longitudinal axis, said lower segment being configured to engage a movable member at the inner surface, and a gland at the outer surface; and
the upper segment has an outer surface that extends to the top surface and is not completely parallel to the axis, and an inner surface that extends to the top surface and is parallel to the axis.

19. The sealing system of claim 15 wherein the seal has
a top surface,
a bottom surface;
a lower segment having the bottom surface; and
an upper segment;
wherein the lower segment has an inner surface and an outer surface that are both parallel to the longitudinal axis, said lower segment being configured to engage a movable member at the inner surface, and a gland at the outer surface.

20. A method of making a compressed tubular seal, comprising the steps of:
providing a tubular mandrel that has a longitudinal axis with a top end and a bottom end;
wrapping a ribbon of flexible compressible material axially around the tubular mandrel at the bottom end thereof to form a wrapped mandrel that has a wrapped portion and an unwrapped portion, the ribbon being wrapped more thickly at the bottom end of the mandrel than at any other portion;
inserting the wrapped mandrel into a barrel that is configured to fit the shape of the wrapped mandrel and enclose all but a top surface of the wrapped portion; and
compressing the wrapped portion with a plunger that is configured to contact the top surface of the wrapped portion, by aligning the plunger with the top surface of the wrapped portion and applying a force in a downward direction on the plunger to form a seal according to claim 1.

21. A seal for a movable member comprising:
a tubular member having a top opening and a bottom opening, with a long axis extending between the top and bottom openings, said member having:
a top surface,
a bottom surface;
a lower segment including the bottom surface
a middle segment, and
an upper segment;
wherein the lower segment has an inner surface and an outer surface that are both parallel to the longitudinal axis, said lower segment being configured to engage a movable member at the inner surface, and a gland at the outer surface;
the middle segment having one of the following axial, cross-sectional shapes:
(a) an outer surface that extends from the outer surface of the lower segment until it meets the upper segment and is not completely parallel to the axis, and an inner surface that extends from the inner surface of the lower segment to the upper segment, and is parallel to the axis;
(b) an inner surface that extends from the inner surface of the lower segment until it meets the upper segment, and is not completely parallel to the axis, and an outer surface that extends from the outer surface of the lower segment to the upper segment, and is parallel to the axis; or
(c) an outer surface that extends from the outer surface of the lower segment until it meets the upper segment and is not completely parallel to the axis, and an inner surface that extends from the inner surface of the lower segment until it meets the upper segment and is not completely parallel to the axis;
the upper segment having an inner surface and an outer surface both extending upwardly parallel to the axis from the middle segment to meet the top surface.
